# EUROPEAN PATENT SPECIFICATION

(11) **EP 0 726 027 B1**
(45) Date of publication and mention of the grant of the patent: **02.02.2000**
(21) Application number: 96201272.0
(22) Date of filing: 01.10.1992
(51) Int. Cl.: A01J 7/04, A01K 13/00

(54) **An implement for cleaning teats**
Gerät zum Reinigen der Zitzen
Dispositif de nettoyage des pis

(30) Priority: 04.10.1991 NL 9101673
(43) Date of publication of application: 14.08.1996
(62) Divisional of application: 92203014.3
(73) Proprietor: Texas Industries Inc., Willemstad, Curaçao (AN)
(72) Inventor: Van der Lely, Cornelis, 6300 Zug (CH)
(74) Representative: Corten, Maurice Jean F.M.

(56) References cited:
- EP-A- 0 309 036
- EP-A- 0 332 232
- EP-A- 0 476 771
- FR-A- 2 559 351

## Description

The present invention relates to an implement for cleaning teats of milk-producing animals, such as cows, with a robot arm capable of carrying a cleaning device which can be brought under the udder of an animal in order to clean said teats and the cleaning device being provided with cleaning members which are operative in at least two different positions. From a hygiene standpoint and with a view to the standards of quality to be imposed on milk, it is important that the animal's udders, or at least their teats, are cleaned prior to milking. From ancient times this has been done manually by the farmer. However, when use is made of an implement for milking animals automatically, an implement for cleaning the teats of these animals should also be provided. In EP-A-0 309 036 a cleaning device - according to the preamble of claim 1 - is disclosed with a horizontally rotatable brush which can be moved forwards and backwards below the cow's udder. Cleaning the sides of the teats with this device is cumbersome. In order to have the capability of cleaning the animal's teats efficiently, the implement for cleaning teats of milk-producing animals is, according to the invention, characterized by the feature of the characterizing part of claim 1. Owing to that the cleaning members are capable of operating in different positions with respect to the teats, an improvement in teat cleaning is achieved. The cleaning members are capable of comprising at least two brushes driven during operation such that in each working position a teat is cleaned on two sides by these brushes. So, brushes can be active on both sides of a pair of teats, whilst by the installation of two pairs of brushes two pairs of teats are cleanable simultaneously on both sides. The brushes are capable of rotating in opposite directions, whilst they are preferably motor-driven and that such that the brushes are movable along a teat from top to bottom. Any dirt adhering to a teat is thus taken downward by the brushes on two sides.

In a specific embodiment the cleaning members are arranged in a bowl, which is rotatable about an axis directed upwardly. The bowl may be driven about this axis by means of a lever gear and a control cylinder. Further, the bowl is movable up- and downwards and is preferably provided with flexible edges to obtain a suitable sealing of the bowl around the animal's udder.

As the cleaning implement may preferably be applied in combination with a milking implement, the cleaning members may be rotatable about a substantially horizontal axis such that, after the cleaning process, teat cups for milking the animal are immediately connectable. The cleaning device may be mounted on a separate robot arm or on the same robot arm on which the teat cups are mounted. This robot arm may be rotatable about its longitudinal axis with respect to a further robot arm. This further robot arm may be capable to swing in elevation with respect to the milking parlour.

The invention will now further be explained with reference to the exemplary embodiment reflected by the accompanying drawings, wherein:
Figure 1 is a schematic representation of a milking parlour provided with a milking robot, which includes the implement according to the invention;

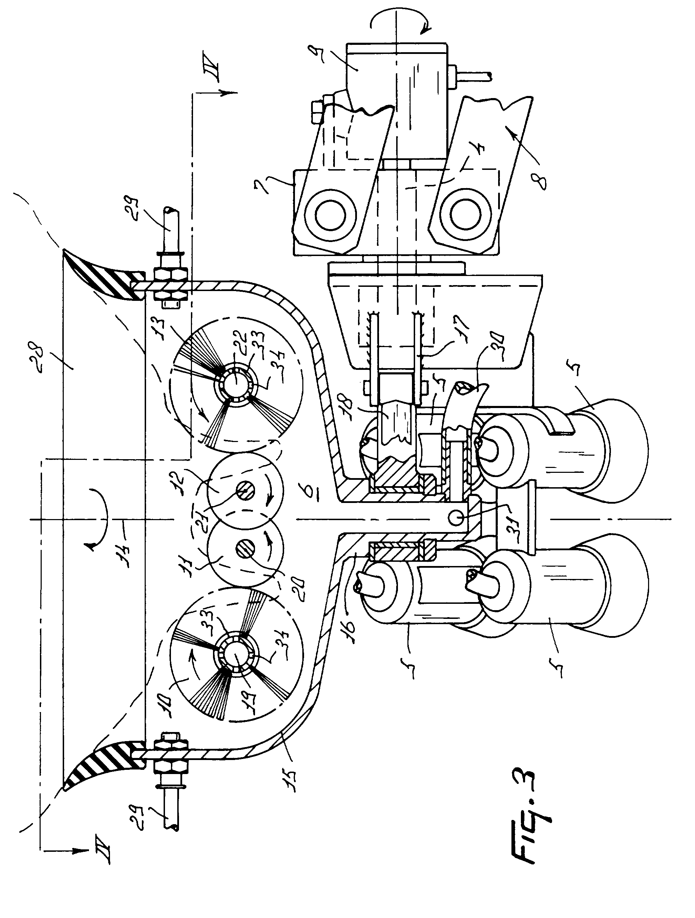

Figure 2 shows in a schematic representation the orientation of the teat cups with respect to the cleaning device and with respect to the robot arm of the milking robot, on which arm the teat cups and the cleaning device are provided;
Figure 3 shows a longitudinal section of the implement according to the invention, and
Figure 4 depicts a top view of the implement according to the invention.

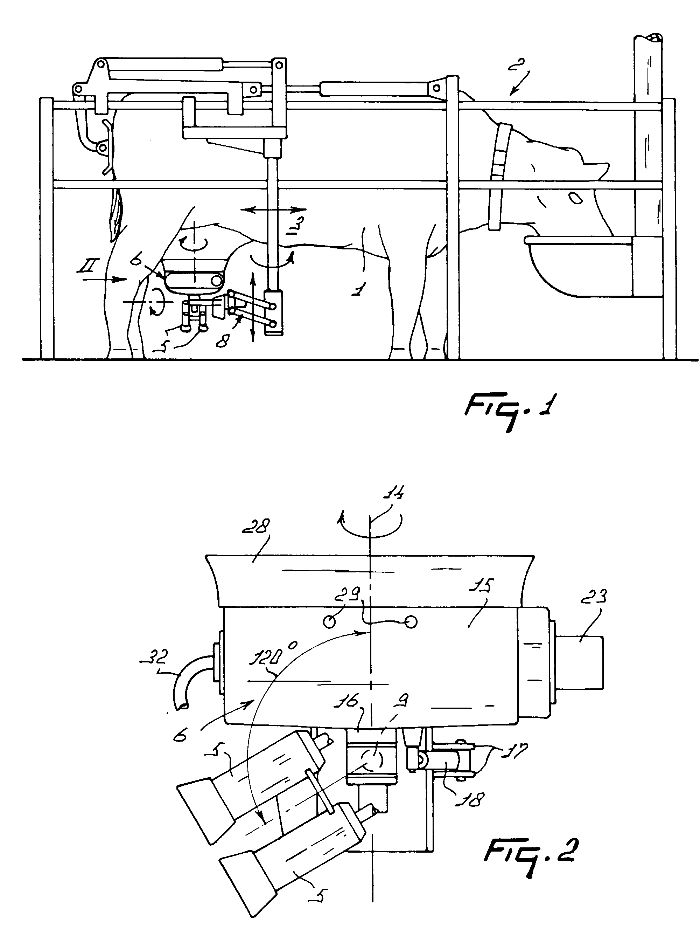

In Figure 1, a cow 1 in milking parlour 2 is depicted, where said milking parlour is provided with a milking robot 3. This milking robot is represented only schematically and hereinafter it will not be described in further detail, since it is no part of the invention. As far as it may be of significance, it is noticed that the milking robot is movable in the longitudinal direction of the milking parlour 2, whilst one or several arms of the milking robot 3 can be swung in a substantially horizontal plane, whilst a last robot arm 4 acting as carrier of teat cups 5 is also movable in height. Various embodiments of such a milking robot have been known for some time and all of them have the capability to position a robot arm provided with teat cups under a cow's udder and that in such a way that by moving upward either each of the teat cups or the joint teat cups, and in case of the latter at least the outer end of the robot arm at the same time then, said teat cups are connectable to the teats of the animal's udder. The robot arm 4 is also provided with a cleaning device 6 for cleaning these teats. The robot arm 4, on which the teat cups 5 and the cleaning device 6 are installed, is rotatable about its longitudinal axis, supported by a bearing device 7 at the end of a robot arm 8 capably of swinging in elevation. In a plane perpendicular to the axis of rotation of the robot arm 4, the teat cups 5 and the cleaning device 6 according to the invention are situated at an angle of 120 degrees with respect to each other, so that by 120 degrees rotation of the robot arm 4 about its longitudinal axis either the teat cups 5 or the cleaning device 6 can be directed upward into a position where the teat cups 5 are connectable to the udder's teats or the cleaning device 6 is connectable to the udder in its entirety. Rotation of the teat cups 5 or the cleaning device 6 is by means of a reversing motor. Obviously, this can also be achieved by means of e.g. a lever gear under hydraulic control. The device 6 is provided with cleaning members 10 through 13 capable of operating in at least two different positions, which positions are obtained by e.g. by rotation through approximately 90 degrees about an upward axis 14. A cleaning operation in two or more positions is achieved here by arranging the cleaning members in a bowl 15, said bowl 15 being rotatable in a bearing 17 in the robot arm 4 by means of a bottom end part in the form of a shaft 16. The bowl 15 is driven to rotate about the axis 14 by means of a lever gear 17 and a control cylinder 18. The cleaning members comprise for every two teats a pair of brushes 10, 11 and 12, 13, with one brush of a pair, 11 and 12 respectively, being arranged in between the pairs of teats, the other, 10 and 13 respectively, on the exterior of a relevant pair of teats. In other words, the cleaning members comprise brushes 10 through 13 being driven during operation such that a teat, or more properly speaking, a pair of teats is cleaned on two sides by these brushes.

The brushes 10 and 11 as well as the brushes 12 and 13 are rotatable in mutually opposite directions and that such that the brushes are movable along a teat or pair of teats from top to bottom. Consequently, the dirt is removed along the teats in downward direction. The brushes 10 to 13 are rotatable about respective, substantially horizontal shafts 19 to 22 and are driven by means of a motor 23 and gear wheels 24 to 27 provided on said shafts. The brushes 10 and 13 are larger in diamater than the brushes 11 and 12. As the corresponding gear wheels 24 and 27 on the shafts 19 and 22 are larger than the gear wheels 25 and 26 on the shafts 20 and 21, the brushes 11 and 12 are driven at a higher speed than the brushes 10 and 13. The brushes 10 to 13 can be hairy and be provided with synthetic fibres; but it is also possible to construct the cleaning members 10 and 13 as brushes, whilst the cleaning members 11 and 12 are made from a plurality of substantially round textile disks. Whether the cleaning members 11 and 12 comprise brushes or rotary textile disks, in both cases the cleaning members will engage each other. In other words, the shafts 20 and 21 are at an interval which is smaller than the diameter of one of the cleaning members. The bowl 15 housing the cleaning members 10 through 13 is provided with flexible edges 28, so that suitable sealing of the bowl 15 around the animal's udder is obtainable.

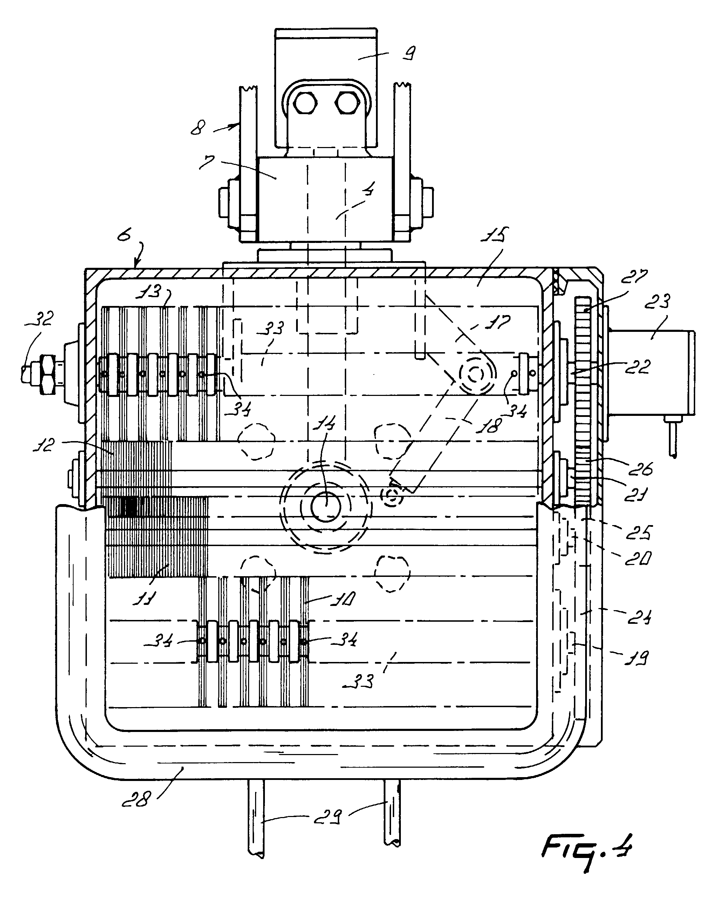

A liquid cleansing agent is used for cleaning the animal's teats. The implement is therefore provided with means for the supply of a liquid, with the aid of which means said liquid cleansing agent is supplied to the periphery of a cleaning member. As to these liquid supply means, only the line connector 29 on the bowl 15 is depicted in Figures 3 and 4. The liquid cleansing agent supplied to the cleaning members 10 through 13 is guided along the teats through the fact that a certain liquid level is maintained in the bowl 15, whilst liquid cleansing agent is swept along by the cleaning members 10 to 13 when rotating. The liquid is drained off through an outlet in the shaft-like bottom end 16 of the bowl 15 and a discharge hose 30. A sensor 31 is provided at the foot of the shaft-like bottom end 16 of the bowl 15, said sensor being capable of establishing the extent of contamination of the liquid cleansing agent. In principle, the supply of liquid through the length of line 29 on the bowl 15 and its discharge through the bottom end 16 of the bowl 15 and the discharge hose 30 lasts until it has been established by means of sensor 31 that the contamination of the liquid cleansing agent has come below a predetermined standard. It is then assumed that the animal's teats have been cleaned sufficiently, which permits the robot arm to be moved downward and the bowl 15 to be removed subsequently by rotation about the longitudinal axis of the robot arm 4 and the teat cups 5 to be put in the position straight under the animal's teats, so that, after the robot arm 4 has been moved upward and the teat cups 5 have been connected to the teats, the process of milking can take place.

Nevertheless, it may be desirable to have a process of drying performed in between wet cleaning and milking. The implement is therefore also provided with means for the supply of drying air, with the aid of which means drying air may be supplied to one or several teats. As to these drying air supply means, only the line connector 32 on the bowl 15 is depicted in Figure 4. It is advantageous to supply the drying air through a cleaning member; in Figure 4, drying air is supplied through shafts 19 and 20, being hollow shafts in the form of tubes 33, of the cleaning members 10 and 13. These tubes are then provided with radial apertures 34. By combining this tubular construction with a relatively high rotary speed of the cleaning members it is achieved that liquid cleansing agent present in the relevant cleaning members is expelled outward by the centrifugal effect. To be able to have the cleaning process and the subsequent milking process performed fully automatically, there are provided means for determining the positions of the teats, enabling the robot arm 4 to be positioned under the animal such that the bowl 15 is easily and correctly connectable to the animal's udder. After the cleaning process, when the bowl 15 is moved downward and turned away and, subsequently, the teat cups 5 are put under the teats of the animal's udder, a slight adjustment to the robot arm 4 is made, if necessary, in order to ensure that the teat cups 5 are connectable. The positioning means for this purpose are usually the same as those through which the bowl 15 is positioned under the udder, although the requirements to be imposed on the positioning of the teat cups 5 under the teats are more severe than those for the positioning of the bowl 15 only. The implement according to the invention furthermore comprises a computer with process control means including said positioning means, with the aid of which the cleaning members are connectable to the animal's udder, the liquid cleansing agent is supplied and the cleaning process is performed, whilst also with the aid of the sensor 31 the contamination of the liquid cleansing agent is determined, whereas, when the contamination has come below a predetermined standard, the cleaning process is stopped and the milking process is started.

## Claims

1. An implement for cleaning teats of milk-producing animals, such as cows, with a robot arm (8) capable of carrying a cleaning device (6) which can be brought under the udder of an animal in order to clean said teats, and the cleaning device (6) being provided with cleaning members (10 - 13) which are operative in at least two different positions characterized in that the different positions are achieved by rotation through approximately 90 degrees about an axis (14) directed upwardly.

2. An implement as claimed in claim 1, characterized in that the cleaning members (10 - 13) comprise at least two brushes (10, 13) driven during operation such that in each working position a teat is cleaned on two sides by these brushes (10, 13).

3. An implement as claimed in claim 2, characterized in that the brushes (10, 13) are rotatable in opposite direction about a respective substantially horizontal axis and movable from top to bottom along a teat.

4. An implement as claimed in any one of the preceding claims, characterized in that the cleaning members (10 - 13) are arranged in a bowl (15), which is rotatable about an axis (14) directed upwardly.

5. An implement as claimed in claim 4, characterized in that the bowl (15) is driven by means of a lever gear (17) and a control cylinder (18).

6. An implement as claimed in claim 4 or 5, characterized in that the bowl (15) is movable up- and downwards and provided with flexible edges (28) to obtain a suitable sealing of the bowl (15) around the animal's udder.

7. An implement as claimed in any one of the preceding claims, characterized in that the cleaning members (10 - 13) are rotatable about a substantially horizontal axis such that, after the cleaning process, teat cups for milking the animal are immediately connectable.

8. An implement as claimed in any one of the preceding claims, characterized in that the cleaning device (6) is mounted on a robot arm (4) which is rotatable about its longitudinal axis with respect to a further robot arm (8).

9. An implement as claimed in claim 8, characterized in that the further robot arm (8) is capable to swing in elevation with respect to the milking parlour (2).

## Patentansprüche

1. Vorrichtung zum Reinigen der Zitzen von milchgebenden Tieren, wie z. B. Kühen, mit einem Roboterarm (8), an dem eine Reinigungsvorrichtung (6) abzustützen ist, die zum Reinigen der Zitzen unter das Euter eines Tieres bewegbar ist, wobei die Reinigungsvorrichtung (6) Reinigungselemente (10 bis 13) aufweist, die in mindestens zwei verschiedenen Positionen wirksam sind,
dadurch gekennzeichnet, daß die verschiedenen Positionen durch Drehen um etwa 90 Grad um eine aufwärts gerichtete Achse (14) erreicht werden.

2. Vorrichtung nach Anspruch 1,
dadurch gekennzeichnet, daß die Reinigungselemente (10 bis 13) mindestens zwei Bürsten (10, 13) aufweisen, die im Betrieb derart angetrieben sind, daß in jeder Arbeitsposition eine Zitze auf beiden Seiten von diesen Bürsten (10, 13) gereinigt wird.

3. Vorrichtung nach Anspruch 2,
dadurch gekennzeichnet, daß die Bürsten (10, 13) um eine zugehörige, im wesentlichen horizontal ausgerichtete Achse gegensinnig drehbar und von oben nach unten an einer Zitze entlangbewegbar sind.

4. Vorrichtung nach einem der vorhergehenden Ansprüche,
dadurch gekennzeichnet, daß die Reinigungselemente (10 bis 13) in einem Becken (15) angeordnet sind, das um eine aufwärts gerichtete Achse (14) drehbar ist.

5. Vorrichtung nach Anspruch 4,
dadurch gekennzeichnet, daß das Becken (15) mittels eines Lagerarmes (17) und eines Steuerzylinders (18) angetrieben wird.

6. Vorrichtung nach Anspruch 4 oder 5,
dadurch gekennzeichnet, daß das Becken (15) höhenbewegbar ist und elastische Ränder (28) aufweist, um eine geeignete Abdichtung des Beckens (15) am Euter des Tieres zu erzielen.

7. Vorrichtung nach einem der vorhergehenden Ansprüche,
dadurch gekennzeichnet, daß die Reinigungselemente (10 bis 13) um eine im wesentlichen horizontale Achse derart drehbar sind, daß nach dem Reinigungsvorgang Zitzenbecher zum Melken des Tieres sofort anschließbar sind.

8. Vorrichtung nach einem der vorhergehenden Ansprüche,
dadurch gekennzeichnet, daß die Reinigungsvorrichtung (6) an einem Roboterarm (4) angeordnet ist, der relativ zu einem weiteren Roboterarm (8) um seine Längsachse drehbar ist.

9. Vorrichtung nach Anspruch 8,
dadurch gekennzeichnet, daß der weitere Roboterarm (8) relativ zu dem Melkstand (2) höhenverschwenkbar ist.

## Revendications

1. Appareil pour nettoyer les trayons d'animaux produisant du lait, tels que des vaches, ayant un robot (8) capable de supporter un dispositif de nettoyage (6) qui peut être amené sous le pis d'un animal afin de nettoyer lesdits trayons, le dispositif nettoyeur (6) étant muni d'éléments de nettoyage (10 à 13) qui sont opérationnels dans au moins deux positions différentes, et caractérisé en ce que les positions différentes sont obtenues par mise en rotation sur approximativement 90° autour d'un axe (14) dirigé verticalement.

2. Appareil selon la revendication 1, caractérisé en ce que les éléments de nettoyage (10 à 13) comportent au moins deux brosses (10, 13) entraînées pendant le fonctionnement de telle sorte que dans chaque position active un trayon est nettoyé sur deux côtés par ces brosses (10, 13).

3. Appareil selon la revendication 2, caractérisé en ce que les brosses (10, 13) sont rotatives dans des sens opposés, autour d'un axe respectif sensiblement horizontal et sont mobiles à partir du haut vers le bas le long d'un trayon.

4. Appareil selon l'une quelconque des revendications précédentes, caractérisé en ce que les éléments de nettoyage (10 à 13) sont agencés dans un bol ( 15) qui peut tourner autour d'un axe (14), dirigé verticalement.

5. Appareil selon la revendication 4, caractérisé en ce que le bol (15) est entraîné par l'intermédiaire d'un appareil à levier (17) et d'un vérin de commande (18).

6. Appareil selon la revendication 4 ou 5, caractérisé en ce que le bol (15) est mobile vers le haut ou vers le bas et comporte des bords souples (28) pour obtenir une étanchéité adaptée du bol (15) autour du pis de l'animal.

7. Appareil selon l'une quelconque des revendications précédentes, caractérisé en ce que les éléments de nettoyage (10 à 13) sont rotatifs autour d'un axe sensiblement horizontal de sorte que, après le processus de nettoyage, les gobelets trayeurs destinés à la traite de l'animal peuvent être immédiatement connectés.

8. Appareil selon l'une quelconque des revendications précédentes, caractérisé en ce que le dispositif nettoyeur (6) est monté sur un bras de robot (4) qui est rotatif autour de son axe longitudinal par rapport à un autre bras de robot (8).

9. Appareil selon la revendication 8, caractérisé en ce que l'autre bras de robot (8) peut basculer en hauteur par rapport à la stalle de traite (2).
